# EUROPEAN PATENT APPLICATION

(11) **EP 4 439 144 A1**
(43) Date of publication of application: **02.10.2024**
(21) Application number: 24161872.7
(22) Date of filing: 06.03.2024
(51) Int. Cl.: G02B 6/46, G02B 6/54

(54) **INSTALLATION GRIP FOR A FIBER OPTIC CABLE AND METHOD OF USING SAME**

(30) Priority: 07.03.2023 US 202363450477 P
(71) Applicant: Corning Research & Development Corporation, Corning, New York 14831 (US)
(72) Inventor: COOKE, Terry Lee, Hickory, NC 28601 (US); HOUSER, Christopher Shawn, Hickory, NC 28601 (US); LEWIS, Jason Anthony, Hickory, NC 28601 (US)
(74) Representative: Reddie & Grose LLP

(57) **Abstract**

An installation grip for a fiber optic cable having an outer jacket, optical fibers, at least one strength member, and a ferrule terminating the optical fibers is disclosed. The installation grip includes a tubular body having an internal cavity configured to receive the ferrule, a pulling plug for connection to a tension member, and at least one slot through the installation grip. The at least one slot is configured to receive the at least one strength member of the fiber optic cable such that a tensile load imposed on the installation grip is transferred to the at last one strength member along a load path that bypasses the ferrule. A method of preparing a fiber optic cable for installation in ductwork at an installation site and a method of installing a fiber optic cable using the installation grip are also disclosed.

## Description

### Technical Field

This disclosure relates generally to fiber optic cables, and more particularly to a streamlined installation grip for a fiber optic cable that transfers the tensile loads imposed on the installation grip during installation of the cable to the strength members carried by the fiber optic cable without a furcation being formed in the fiber optic cable. The disclosure also relates to a fiber optic cable having such an installation grip and a method of using the installation grip to install the fiber optic cable.

### Background

Optical fibers are useful in a wide variety of applications, the most common being as part of the physical layer of a communication protocol through which network nodes communicate over a data network. Benefits of optical fibers include wide bandwidth and low noise operation. An optical distribution network comprised entirely of passive optical components is commonly referred to as a passive optical network (PON). Continued growth of the Internet has resulted in a corresponding increase in demand for network capacity and reliability. This demand for reliable network capacity has, in turn, caused carriers to extend their PONs closer to the end user. This extension of optical fiber toward the ends of the network (e.g., node, curb, building, home, etc.) is commonly referred to as Fiber-To-The-x (FTTx).

In one such network configuration, carriers desire to extend their PONs all the way to user workstations within office buildings, for example. This type of extension of the carrier PONs may be referred to as Fiber-To-The-Workplace (FTTW). In FTTW network configurations, an office building may have a telecommunications room in a lower floor of the building that establishes a local area network (LAN) for the office building. The network equipment in the telecommunications room may be optically connected to workstations throughout the office building by fiber optic cables that are routed through ductwork that is laid during the construction of the office building, for example. To increase bandwidth, it is desirable to locate as many optical fibers through the ductwork as possible while also allowing installers to physically route the fiber optic cable through the ductwork.

To route the fiber optic cable through the ductwork during installation, one end of the cable is typically provided with an installation grip. A tension member that extends through the ductwork is then coupled to the installation grip and the fiber optic cable is pulled through the ductwork by the tension member. Depending on several factors, including the size of the fiber optic cable, the length of the conduit, and the resistance met during the pulling of the cable through the ductwork, the fiber optic cable may be subjected to relatively high tensile loads. Many current fiber optic cables include one or more strength members (e.g., glass reinforced polymer rods, steel rods, aramid yarns, or the like) that extend the length of the fiber optic cables to accommodate the tensile loads applied to the fiber optic cables during their installation through the ductwork.

In many cases, the end of the fiber optic cable is pre-terminated with one or more connectors. Pre-terminated fiber optic cables may be manufactured and tested before shipping to an installation site and avoid the cost, time and reworks that often accompany field connectorization processes. As is generally known in the fiber optic industry, pre-terminated fiber optic cables typically include an epoxy-filled furcation housing within which the cable jacket and strength members of the cable are terminated, and beyond which the connectorized optical fibers of the cable are provided for connection to other fiber optic devices or equipment. In conventional arrangements, installation grips typically extend over the (unjacketed) optical fibers downstream of the furcation housing, to protect the optical fibers and associated connectors, and attach to the furcation housing. In this way, the tensile loads applied to the installation grip are transferred to the strength members of the fiber optic cable via the furcation housing without the tensile load path extending through the more fragile optical fibers and their associated connectors carried by the fiber optic cable.

While current implementations of installation grips on fiber optic cables and their use in routing fiber optic cables through existing ductwork are satisfactory for their intended purpose, there is a desire to increase the fiber density within fixed size ductwork in an FTTW arrangement. Indeed, the efficient utilization of space (i.e., more capacity in less space) has become a primary design driver for manufacturers and installers as the demand for bandwidth has increased. The challenge here is how to increase the number of optical fibers when, in many cases, aspects of the physical infrastructure have already been established or determined (and realizing that rebuilding the physical infrastructure is a high-cost option). In other words, the challenge becomes how to increase the number of optical fibers in existing ductwork having a fixed size.

With this in mind, there is a desire to provide fiber optic cables with a smaller cross-sectional area. This will allow more fiber optic cables, and thus more optical fibers, to fit within the ductwork of office building environments or other FTTW network environments. While many factors may impact the cross-sectional area of the fiber optic cable, including the diameter of each optical fiber itself, the thickness of the outer jacket, etc., manufacturers have realized that the configuration of the connector(s) and the furcation housing are primary sources that define the cross-sectional area of the fiber optic cable. As noted above, the furcation housing effectively provides an attachment point for the installation grip to access the strength members of the fiber optic cable. However, if manufacturers omit furcation housings from the construction of their fiber optic cables, there remain challenges of how to route the fiber optic cables through ductwork without damaging the optical fibers or connectors carried by the fiber optic cable.

### Summary

In one aspect of the disclosure, an installation grip for a fiber optic cable is disclosed. The fiber optic cable includes an outer jacket, a plurality of optical fibers carried within the outer jacket, at least one strength member extending along a length of the fiber optic cable, and a ferrule terminating the plurality of optical fibers. The installation grip includes a tubular body having a proximal end, a distal end, and an internal cavity configured to receive the ferrule. The tubular body includes at least one slot adjacent its distal end. The installation grip further includes a pulling plug at the proximal end of the tubular body for connection to a tension member for pulling the fiber optic cable along ductwork at an installation site. The at least one slot in the tubular body is configured to receive the at least one strength member of the fiber optic cable such that a tensile load imposed on the installation grip when pulling the fiber optic cable along the ductwork is transferred to the at last one strength member of the fiber optic cable along a load path that bypasses the ferrule. This arrangement provides strain relief to the ferrule and the optical fibers immediately adjacent the ferrule during the installation process.

In one embodiment, the installation grip may have a clam shell configuration including a first half shell defining a first cavity portion and a second half shell defining a second cavity portion, wherein the first half shell and the second half shell may be configured to be coupled together to form the installation grip. In one embodiment, the first half shell and the second half shell may be separate, disconnected elements. However, in an alternative embodiment, the first half shell and the second half shell may be connected together through a hinge arrangement, for example. In these embodiments, when the first half shell and the second half shell are coupled together, the first cavity portion and the second cavity portion define the internal cavity.

In one embodiment, the first half shell may include at least one first slot portion and the second half shell may include at least one second slot portion. When the first half shell and the second half shell are coupled together, the at least one first slot portion and the at least one second slot portion define the at least one slot. In an exemplary embodiment, the at least one first slot portion includes a pair of first slot portions, the at least one second slot portion includes a pair of second slot portions, and when the first half shell and the second half shell are coupled together, the pair of first slot portions and the pair of second slot portions define a pair of slots. In one embodiment, the pair of slots may be on opposed sides of the installation grip.

In one embodiment, the installation grip may include a retention groove and the at least one slot may be positioned in the retention groove. For example, in one embodiment, the first half shell may include a first retention groove portion and the second half shell may include a second retention groove portion. When the first half shell and the second half shell are coupled together, the first retention groove portion and the second retention groove portion define the retention groove. In one embodiment, the installation grip may further include a clamp configured to be attached to the installation grip in the retention groove and to fix the at least one strength member of the fiber optic cable to the installation grip so that the tensile load imposed on the fiber optic cable is transferred to the at least one strength member. In one embodiment, the clamp may include heat shrink material, such as a heat shrink tube that extends over a portion of the installation grip and a portion of the fiber optic cable to achieve the fixation.

In one embodiment, the installation grip may further include at least one latch for securing the first half shell and the second half shell together. In an exemplary embodiment, for example, the at least one latch may include at least one spring clip, and possibly a pair of spring clips, to secure the first half shell and the second half shell together.

In one embodiment, the internal cavity of the installation grip may define a shape that substantially matches the shape of the ferrule or the shape of a connector sub-assembly that includes the ferrule to limit movement of the ferrule or the connector sub-assembly relative to the installation grip. The ferrule or the connector sub-assembly in such an embodiment may be configured to be assembled with a connector housing when the ferrule or the connector sub-assembly is not encased by the installation grip to form a fiber optic connector. Moreover, in one embodiment, the internal cavity of the installation grip may include at least one rotational stop cavity configured to receive at least one rotational stop on the fiber optic cable to limit rotation of the installation grip, and the ferrule encased therein, relative to the fiber optic cable.

In another aspect of the disclosure, a fiber optic cable assembly is disclosed. The fiber optic cable assembly includes a fiber optic cable having an end. The fiber optic cable includes an outer jacket, a plurality of optical fibers carried within the outer jacket, at least one strength member extending along a length of the fiber optic cable, and a ferrule terminating the plurality of optical fibers at the end of the fiber optic cable. Furthermore, the fiber optic cable assembly includes the installation grip according to the first aspect described above encasing the ferrule at the end of the fiber optic cable for routing the fiber optic cable assembly along ductwork at an installation site. The routing of the fiber optic cable along the ductwork causes a tensile load to be imposed on the installation grip, and the installation grip transfers the tensile load to the at least one strength member along a load path that bypasses the ferrule.

In one embodiment, the ferrule may be part of a connector sub-assembly that further includes a ferrule push component disposed between an end of the outer jacket and the ferrule, and the connector sub-assembly is configured to be assembled with a connector housing when the connector sub-assembly is not encased by the installation grip to form a fiber optic connector. Optionally, in one embodiment, the internal cavity of the installation grip may define a shape that substantially matches the shape of the connector sub-assembly to limit movement of the connector sub-assembly relative to the installation grip. Furthermore, in one embodiment, the outer jacket of the fiber optic cable may extend into the installation grip and the at least one slot in the tubular body of the installation grip may be disposed between an end of the outer jacket and the ferrule.

In another aspect of the disclosure, a method of preparing a fiber optic cable for installation along ductwork of an installation site is disclosed. The fiber optic cable includes an outer jacket, a plurality of optical fibers carried within the outer jacket, at least one strength member extending along a length of the fiber optic cable, and a ferrule terminating the plurality of optical fibers. The method includes encasing the ferrule in an installation grip and coupling the at least one strength member from the fiber optic cable to the installation grip such that a tensile load imposed on the installation grip during routing of the fiber optic cable assembly along the ductwork is transferred to the at least one strength member along a load path that bypasses the ferrule.

In one embodiment, the installation grip may include a first half shell and a second half shell and encasing the first connector component in the installation grip may include placing the ferrule in a cavity portion of one of the first half shell and the second half shell and coupling the first half shell to the second half shell to encase the ferrule in the installation grip. In one embodiment, the method may further include securing the first half shell and the second half shell together. In one embodiment, for example, securing the first half shell and the second half shell together may include latching the first half shell and the second half shell together. More specifically, in one embodiment, latching the first half shell and the second half shell together may include using at least one spring clip to latch the first and second half shells together.

In one embodiment, coupling the at least one strength member from the fiber optic cable assembly to the installation grip may include inserting the at least one strength member of the fiber optic cable through a slot in the installation grip, tensioning the at least one strength member, and fixing the at least one strength member to the installation grip. In one embodiment, fixing the at least one strength member to the installation grip may include clamping the at least one strength member to the installation grip. This arrangement provides strain relief to the ferrule and the optical fibers immediately adjacent thereto.

In yet another aspect of the disclosure, a method of routing a fiber optic cable assembly along ductwork at an installation site is disclosed. The fiber optic cable includes a fiber optic cable having an outer jacket, a plurality of optical fibers carried within the outer jacket, at least one strength member extending along a length of the fiber optic cable, and a ferrule terminating the plurality of optical fibers. The fiber optic cable assembly further includes an installation grip encasing the ferrule. The method includes attaching a tension member to the installation grip and applying a tensile load on the installation grip to route the fiber optic cable assembly along the ductwork. The installation grip directs the tensile load to the at least one strength member of the fiber optic cable along a load path that bypasses the ferrule.

In one embodiment, applying a tensile load on the installation grip includes pulling the tension member to route the fiber optic cable assembly along the ductwork, and/or using air-assist methods to route the fiber optic cable assembly along the ductwork.

Additional features and advantages will be set forth in the detailed description which follows, and in part will be readily apparent to those skilled in the technical field of optical connectivity. It is to be understood that the foregoing general description, the following detailed description, and the accompanying drawings are merely exemplary and intended to provide an overview or framework to understand the nature and character of the claims.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 is a schematic view illustrating an exemplary carrier network including a passive optical network in which embodiments of the disclosure may be used.
Fig. 2 is schematic view of an exemplary FTTW network in an office building.
Fig. 3 is a cross-sectional view of ductwork having an outer duct and a plurality of microducts for carrying fiber optic cables.
Fig. 4 is a partial perspective view of a fiber optic cable assembly including an installation grip disposed over an end of a pre-terminated fiber optic cable in accordance with an embodiment of the disclosure.
Fig. 5 is a disassembled view of a fiber optic cable pre-terminated with a connector sub-assembly.
Fig. 6 is a disassembled view of the installation grip shown in Fig. 4 for encasing the connector sub-assembly illustrated in Fig. 5.
Figs. 7A and 7B are views of half shells that form the installation grip.
Figs. 8-10 illustrate a process for preparing a fiber optic cable for installation in ductwork at an installation site by connection of the installation grip to the end of the fiber optic cable.
Fig. 11 is a partial perspective view a fiber optic cable pre-terminated with connector components according to an alternative embodiment, with an installation grip according to an alternative embodiment shown disassembled from the fiber optic cable.
Figs. 12A and 12B are views of half shells that form the installation grip of Fig. 11.
Fig. 13 is a view of the connector components of Fig. 11 placed in one of the half shells of the installation grip as part of a process of connecting the installation grip to the end of the fiber optic cable.

### Detailed Description

Various embodiments will be further clarified by examples in the description below. In general, the description relates to an installation grip for installing a fiber optic cable through ductwork at an installation site. The fiber optic cable includes a plurality of optical fibers that are pre-terminated by a ferrule or a connector sub-assembly that includes the ferrule. In order to reduce the size of the fiber optic cable, the ferrule or connector sub-assembly including the same is not a complete or otherwise defined fiber optic connector but only a portion thereof. The ferrule or connector sub-assembly is configured to be assembled with a connector housing/body to form (i.e., define) the fiber optic connector. The installation grip is configured to encase the ferrule or connector sub-assembly. Additionally, the installation grip is configured to be fixed to at least one strength member of the fiber optic cable. To reduce the size of the fiber optic cable, this connection to the at least one strength member is achieved without a furcation (and its associated furcation housing). In an embodiment of the disclosure, the installation grip includes at least one slot. The at least one strength member is received through the at least one slot, pre-tensioned by pulling the at least one strength member, and is then fixed to the installation grip in the tensioned state. For example, a heat shrink tube may fix the at least one strength member to the installation grip.

When the at least one strength member is fixed to the installation grip, tensile loads imposed on the installation grip during routing of the fiber optic cable through the ductwork is transferred to the at least one strength member of the fiber optic cable along a load path that effectively bypasses the ferrule and the optical fibers immediately adjacent the ferrule. In this way, the installation grip provides strain relief to the ferrule and adjacent optical fibers, thereby reducing the likelihood of damaging the fiber optic cable during its installation through the ductwork. The installation grip may have a clamshell configuration that facilitates connection of the installation grip to the fiber optic cable. Other benefits of the installation grip and associated methods are described in further detail below.

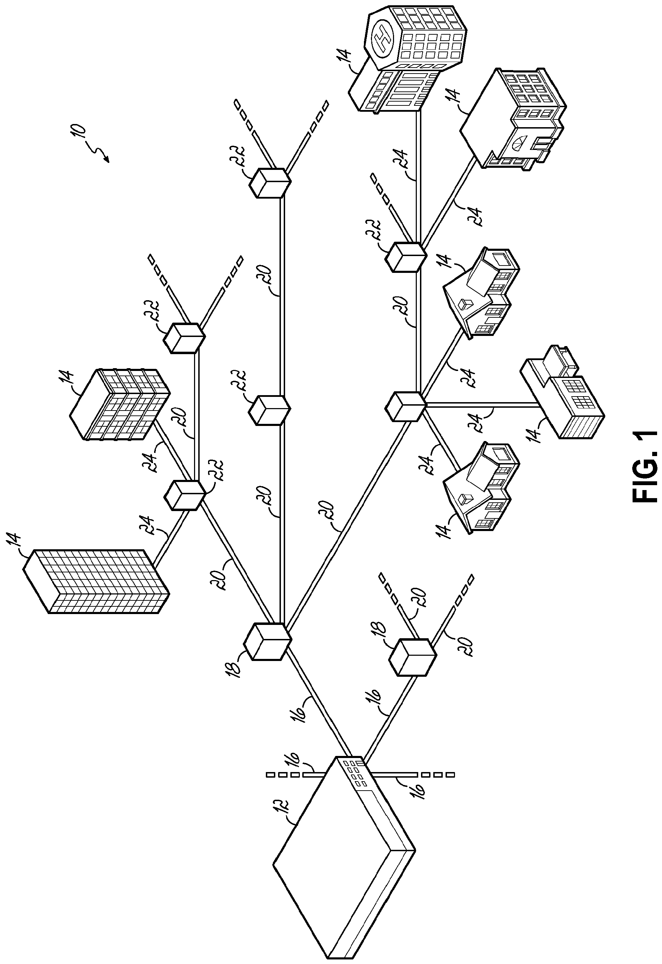

Fig. 1 depicts an exemplary FTTx carrier network 10 that distributes optical signals generated at a switching point 12 (e.g., a central office) to one or more subscriber premises 14. Optical line terminals (OLTs - not shown) at the switching point 12 convert electrical signals into optical signals. Fiber optic feeder cables 16 then carry the optical signals to various local convergence points 18. The convergence points 18 act as locations for making cross-connections and interconnections (e.g., by splicing or patching cables). The local convergence points 18 often include splitters or WDM components to enable any given optical fiber in the feeder cable 16 to serve multiple subscriber premises 14. As a result, the optical signals are "branched out" from the optical fibers of the feeder cables 16 to optical fibers of fiber optic distribution cables 20 that exit the local convergence points 18.

At remote network access points 22 closer to the subscriber premises 14, some or all of the optical fibers in the distribution cables 20 may be accessed to connect to one or more subscriber premises 14. Drop cables 24 extend from the network access points 22 to the subscriber premises 14, which may be single-dwelling units (SDU), multi-dwelling units (MDU), businesses, and/or other facilities or buildings. An optical network terminal (ONT - not shown) located at or inside the subscriber premises 14 receives one or more optical signals and converts the optical signals back to electrical signals at the remote distribution points or subscriber premises 14.

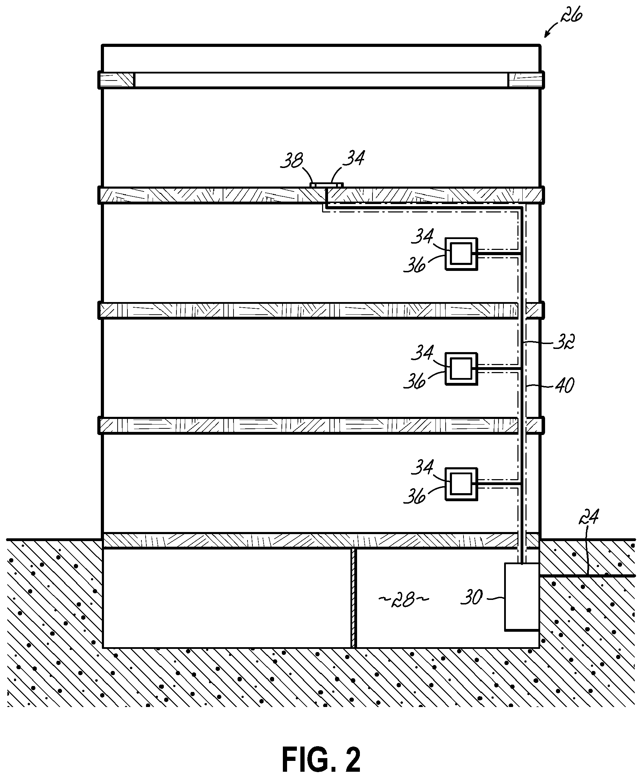

One embodiment of an FTTx network is a FTTW network, which provides fiber to the workplace, such as an office building or the like. As illustrated in Fig. 2, in an FTTW network, the drop cable 24 from a network access point 22 generally enters the office building 26 at a basement or lower floor having a telecommunications room 28 with one or more cabinets 30 for holding network equipment (not shown). Fiber optic cables 32 connect the network equipment in the one or more cabinets 30 to network boxes 34 associated with various workstations throughout the office building 26. By way of example and without limitation, the network boxes 34 may include wall panels 36 on the various levels of the office building 26 and/or floor panels 38 extending under the floors to floating workstations (e.g., not adjacent to a wall) on the various levels of the office building 26. As is generally known in the fiber optic industry, the wall panels 36 and the floor panels 38 generally include one or more optical ports (not shown) for connecting equipment at the workstations to the fiber optic network 10.

To protect the fiber optic cables 32 from damage during installation, construction, and general maintenance, the fiber optic cables 32 are typically enclosed in ductwork 40 (shown in phantom in Fig. 2) that defines pathways between the telecommunications room 28 and the network boxes 34. For example, during construction of the office building 26, the ductwork 40 from telecommunications room 28 to the network boxes 34 will be laid. The fiber optic cables 32 will then be routed through the ductwork 40 to extend from the telecommunications room 28 to the network boxes 34 on the different levels of the office building 26. As explained in more detail below, the fiber optic cables 32 may be pre-terminated with a ferrule or connector sub-assembly that includes the ferrule at one end of the cable (the end that is being routed through the ductwork 40). The other end of the fiber optic cable may be pre-terminated with a fiber optic connector (e.g., a complete fiber optic connector since that end is not being routed through the ductwork 40). Thus, once the fiber optic cables 32 are routed through the ductwork 40, the ferrules or connector sub-assemblies may be assembled with respective connector housings to define optical connectors at the end of the fiber optic cable routed through the ductwork 40. The fiber optic connectors at the end of the fiber optic cable 32 may then be connected to, for example, the fiber optic ports associated with the network equipment in the one or more cabinets 30 in the telecommunications room 28. Similarly, the fiber optic connectors at the other end of the fiber optic cable 32 may be connected to, for example, the fiber optic ports in the wall panels 36 and/or floor panels 38. In this way, when equipment at one of the workstations is connected to one of the network boxes 42, that equipment may access the fiber optic network 10.

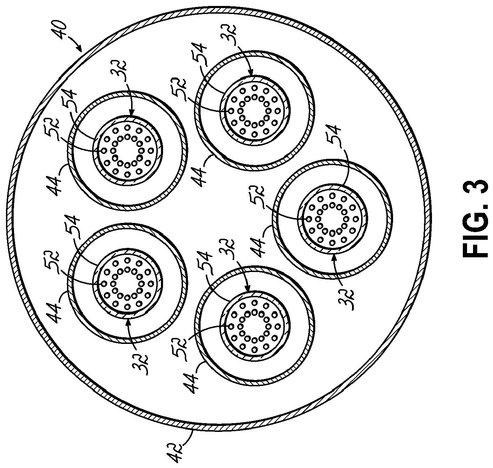

Fig. 3 illustrates typical ductwork 40 in an office building environment, such as office building 26. The ductwork 40 generally includes an outer tube 42 that encloses a plurality of microducts 44. Microducts 44 are generally small ducts or tubes having a diameter anywhere between about 3 millimeters (mm) and about 16 mm that are configured to receive a fiber optic cable therethrough. In an embodiment, for example, the microducts 44 may have a diameter of about 10 mm. As noted above, to increase bandwidth on each level of the office building, it is desirable to locate as many optical fibers in each of the microducts 44 as possible. Of course, the challenge becomes how to route the fiber optic cable 32 through the microducts 44 when the fiber optic cable 32 includes a large number of optical fibers. This challenge becomes even greater when the fiber optic cable 32 is pre-terminated.

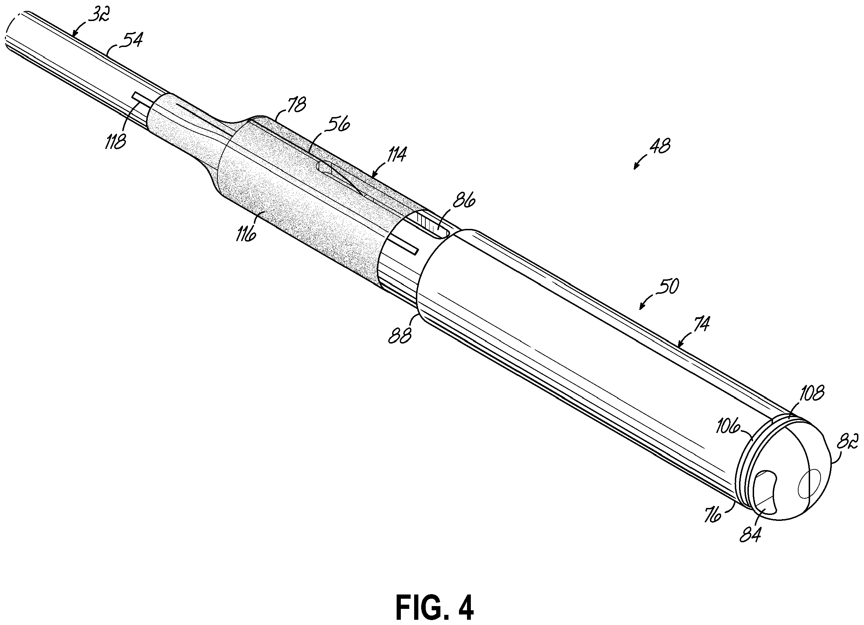

Figs. 4-6 illustrate a fiber optic cable assembly 48 in accordance with an exemplary embodiment of the disclosure. The fiber optic cable assembly 48 includes the fiber optic cable 32 and an installation grip 50 connected to an end thereof for routing the fiber optic cable 32 along pathways defined by the ductwork 40 in the office building 26. In an exemplary embodiment, the fiber optic cable 32 includes a plurality of optical fibers 52 carried within an outer sheath or jacket 54 ("outer jacket 54"). By way of example and without limitation, the fiber optic cable 32 may carry 24 optical fibers 52. It should be appreciated, however, that the fiber optic cable 32 may include more or less optical fibers 52 and remain within the scope of the present disclosure. The optical fibers 52 may be configured as loose fibers or as ribbon fiber, such as rollable ribbon fiber. The fiber optic cable 32 further includes at least one strength member 56 extending along the length of the fiber optic cable 32 to accommodate tensile loading of the fiber optic cable 32. In other words, instead of tensile loads on the fiber optic cable 32 being borne by the optical fibers 52, and possibly damaging the optical fibers 52, the tensile loads are borne by the at least one strength member 56, thereby minimizing damage to the optical fibers 52. The at least one strength member 56 may include glass reinforced polymer rods, steel rods, aramid yarns, or the like. In one embodiment, the at least one strength member 56 may extend along the plenum defined by the outer jacket 54. Alternatively, the at least one strength member 56 may be incorporated within the outer jacket 54 itself. In one embodiment, for example, the fiber optic cable 32 may include two strength members 56 generally on opposed sides of the fiber optic cable 32. However, other numbers and arrangements of strength members 56 may be possible.

As noted above, it is preferred that the optical fibers 52 of the fiber optic cable 32 be pre-terminated. In the normal course, the optical fibers 52 of the fiber optic cable 32 would be pre-terminated by a fully formed fiber optic connector. In the present disclosure, however, the optical fibers 52 are pre-terminated by a ferrule or a connector sub-assembly that forms less than a complete fiber optic connector. In general, and specifically according to this disclosure, fiber optic connectors are designed to provide two primary functions: alignment of optical fibers for optical coupling, and mechanical retention to maintain that alignment. Assembling components intended to provide those primary functions is what defines the assembly as a fiber optic connector.

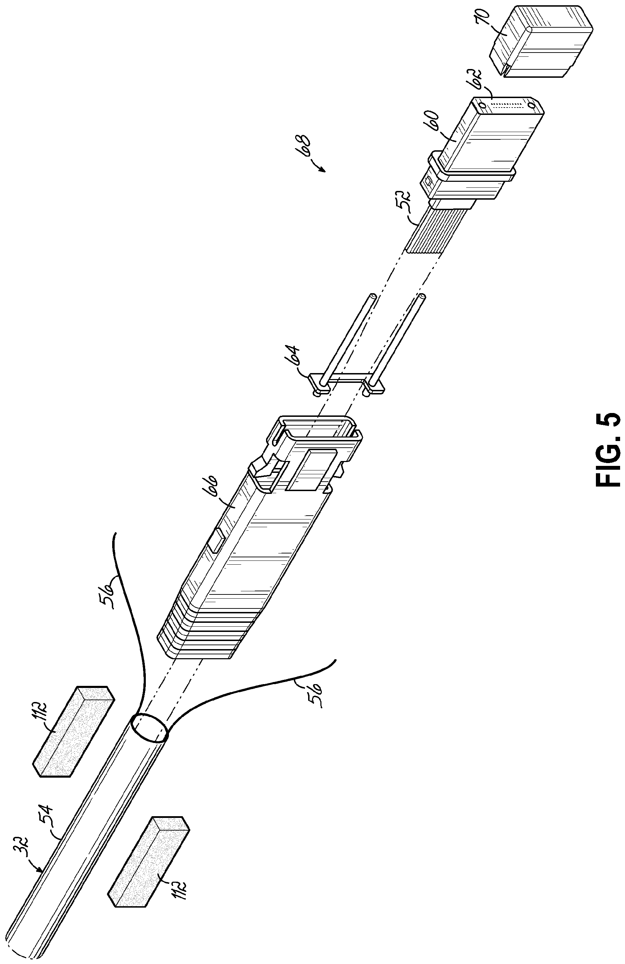

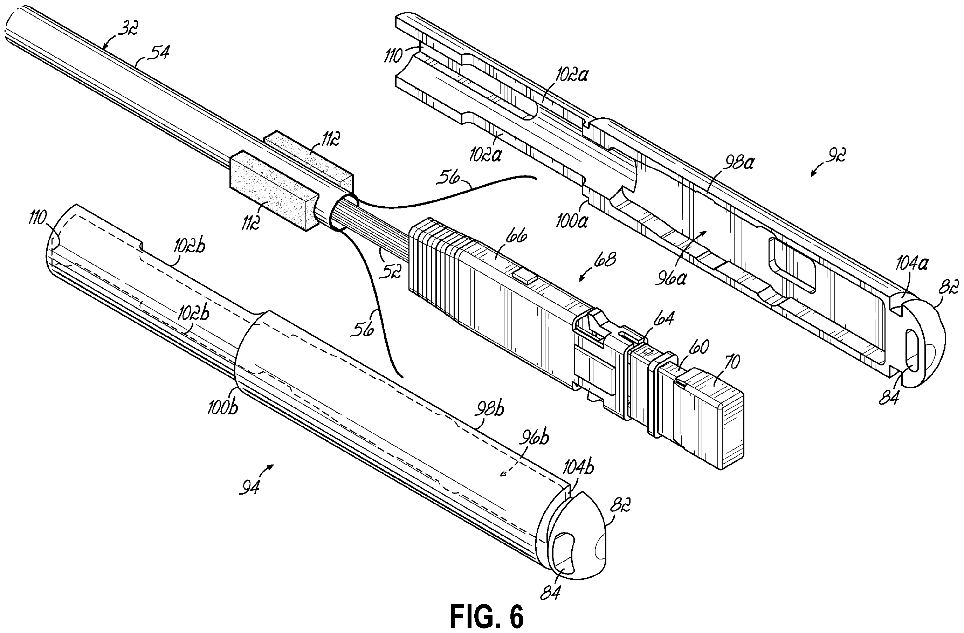

In a multi-fiber push-on/pull-off (MPO) fiber optic connector, and many other plug-type connectors, the component for the purpose of optical alignment is a ferrule. To this end, Figs 5 and 6 illustrate a ferrule 60 that may be installed on at least one of the ends of the fiber optic cable 32 to terminate the optical fibers 52. The ferrule 60 may be an MT-type ferrule having bores designed to receive and support optical fibers 52 in a row or array (more than one row) configuration. The optical fibers 52 are processed so that their ends are substantially flush with an end face 62 of the ferrule 60, which may or may not be angled relative to a plane that is perpendicular to a longitudinal axis of the ferrule 60. In this case, the presence of the guide pins 64 make the ferrule 60 male-type ferrules, although this disclosure equally applies to female-type ferrules. These figures also illustrate guide pins 64 protruding through the ferrule 60 and a ferrule push component 66 (or "ferrule push 66") located behind the ferrule 60. Both of these components may also be installed on the optical fibers 52 that are terminated by the ferrule 60.

In an MPO connector and many other plug-type connectors, the component for the purpose of mechanical retention is a connector housing (also referred to simply as a "housing" or as "connector body" or simply "body"). The connector housing receives the ferrule and includes a coupling mechanism, such as a latch feature for cooperating with a complementary latching feature of an adapter. Normally, a ferrule and a connector housing of an optical connector are assembled during the process of terminating the optical fibers with the fiber optic connector. In other words, the final pre-terminated assembly typically includes both the ferrule and the connector housing. And since these components are the minimum components required to define an optical connector, such a final pre-terminated assembly itself is considered to have an optical connector.

In Figs. 5 and 6, however, the connector housing does not initially form part of the termination of the optical fibers 52 of the fiber optic cable 32. The ferrule 60 (element for optical alignment) is installed on the optical fibers 52 but the connector housing (element for mechanical retention) is not. Thus, the optical fibers 52 are pre-terminated by something less than a complete fiber optic connector. The ferrule 60 may be all that is present in some embodiments. Or, as shown in Figs. 5 and 6, the ferrule 60 may be part of a connector sub-assembly 68 that includes additional components, such as the guide pins 64 and the push component 66, but not a connector housing. The connector sub-assembly 68 is configured to be assembled with a connector housing/body (not shown), or some other connector sub-assembly including the same, to form a fiber optic connector according to this disclosure. Additional details of such a fiber optic connector may be found in U.S. Patent Nos. 11,280,966 and 11,474,307, the disclosures of which are incorporated by reference herein in their entirety.

The disaggregated fiber optic connector may provide certain benefits to the fiber optic cable assembly 48 of the present disclosure. For example, the cross-sectional dimension of the fiber optic cable 32 may be reduced, since the connector housing is not included at the terminated end of the optical fibers 52 of the fiber optic cable 32. Additionally, most of the failure issues associated with field connectorization involve the connection between the ferrule 60 and the optical fibers 52. Thus, most of the connectorization issues of field assembly may be avoided by pre-terminating the optical fibers 52 with at least the ferrule 60 in a manufacturing setting. According to the above, terminating the optical fibers 52 with the connector sub-assembly 68, which is not itself an optical connector since the intended component for mechanical retention (the connector housing/body) is not present, provides a smaller cross-sectional fiber optic cable 32 for routing through ductwork 40 of the office building 26 while retaining the benefits of pre-termination of the fiber optic cable 32.

To protect the connector sub-assembly 68 for future assembly with a connector housing/body to form an optical connector, the connector sub-assembly 68 may further include a dust cap 70. The dust cap 70 may be coupled to the ferrule 60 and/or the ferrule push 66 and be configured to cover the end face 62 of the ferrule 60 and keep it free of debris that could degrade the optical signals in the optical fibers 52 during use. Of course, the dust cap 70 must be removed from the connector sub-assembly 68 prior to assembling the connector sub-assembly 68 with a connector housing/body. Nevertheless, it is expected that the dust cap 70 will remain part of the connector sub-assembly 68 during the routing of the fiber optic cable 32 through the pathways of the ductwork 40 in the office building 26 using the installation grip 50.

In addition to terminating the optical fibers 52 with a connector sub-assembly 68, as opposed to a completed fiber optic connector, the cross-sectional dimension of the fiber optic cable 32 may be further reduced by pre-terminating the optical fibers 52 without the use of a furcation housing, which generally increases the footprint of the fiber optic cable 32 within the microduct 44. While eliminating the furcation housing reduces the cross-sectional dimension of the fiber optic cable 32, this also increases the chances of damaging the optical fibers 52 during the installation of the fiber optic cable 32 within the microduct 44. More particularly, as was discussed above, during installation of a fiber optic cable 32, the installation grip 50 will typically be attached to one end of the fiber optic cable 32. A tension member that is pre-routed through the microduct 44 will then be attached to the installation grip 50. The tension member will then be pulled back through the microduct 44, thereby pulling the end of the fiber optic cable 32 through the microduct 44. The tension created by pulling on the tension member is initially borne by the installation grip 50. In the normal course, the installation grip 50 is connected to the furcation housing, which is in turn connected to the strength members associated with the fiber optic cable. However, if the furcation housing is eliminated to reduce the cross-sectional dimension of the fiber optic cable 32, then there is a challenge of how to transfer the tension, imposed by pulling on the tension member, from the installation grip 50 to the at least one strength member 56 without damaging the terminated optical fibers 52.

Figs. 4 and 6 illustrate an installation grip 50 in accordance with an embodiment of the disclosure. The installation grip 50 is configured to enclose the connector sub-assembly 68 that terminates the optical fibers 52 at the end of the fiber optic cable 32. Additionally, the installation grip 50 is configured to transfer tension on the installation grip 50 to the fiber optic cable 32, and more particularly to the at least one strength member 56 thereof, along a load path that effectively bypasses the connector sub-assembly 68 and the optical fibers 52 terminated by the connector sub-assembly 68 (and specifically the ferrule 60 thereof). The transfer of the tension load from the installation grip 50 to the at least one strength member 56 is along a direct load path and does not include a furcation housing or other similar intervening structure.

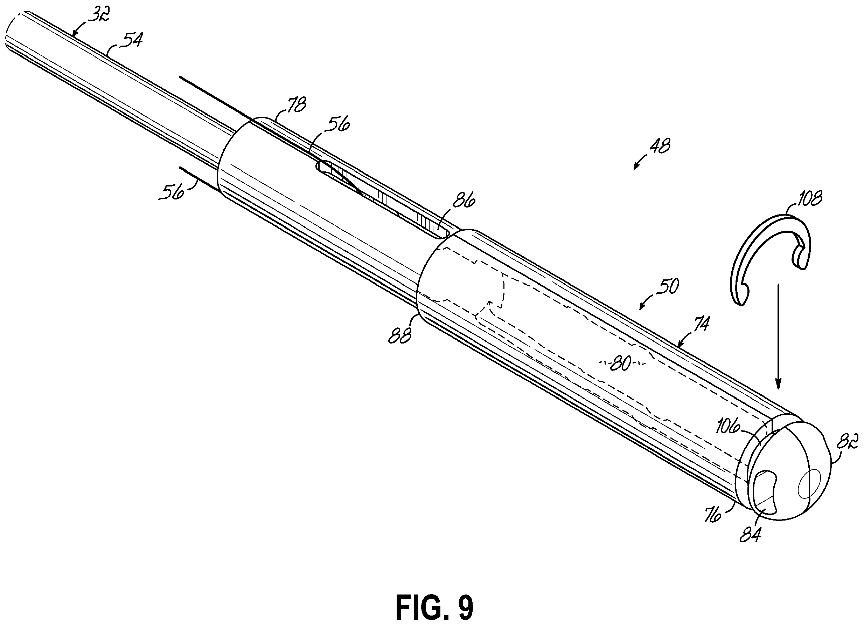

The installation grip 50 includes an elongate tubular body 74 having a proximal end 76, distal end 78, and an interior cavity 80 (Fig. 9) configured to receive the connector sub-assembly 68 therein. As used herein, the term "proximal" references a location or direction more toward the end of the fiber optic cable 32 and the term "distal" refers to a location or direction away from the end of the fiber optic cable 32. In an exemplary embodiment, the tubular body 74 may be formed from a material having adequate tensile strength to accommodate the tensile loads expected during the routing of the fiber optic cable 32 in the ductwork 40. In one embodiment, for example, the tubular body 74 may be formed from a metal, such as stainless steel, and as such may be generally rigid in its construction. The rigidity of the tubular body 74 may also prevent the plurality of optical fibers 52 and the connector sub-assembly 68 that terminates the optical fibers 52 and contained in the interior cavity 80 of the tubular body 74 from being crushed or otherwise damaged as the fiber optic cable 32 is being moved through the ductwork 40.

In an alternative embodiment, the tubular body 74 may be formed from a plastic material, such as a reinforced plastic material, that provides adequate tensile strength and some level of flexibility, which may improve the ability of the installation grip 50 to navigate turns in the pathway. For example, the tubular body 74 may be formed from carbon reinforced polyvinylchloride (PVC). This material may also provide some protection against crush forces to minimize damage to the optical fibers 52 and the connector sub-assembly 68 contained in the interior cavity 80 of the tubular body 74. Other materials may also be possible and should not be limited to the materials described herein. Moreover, in an exemplary embodiment, the tubular body 74 may be generally circular in cross section. It should be recognized, however, that other cross-sectional profiles may be possible.

The proximal end 76 of the tubular body 74 may be closed off by a pulling plug 82 (also referred to as "end cap"). In one embodiment, the pulling plug 82 may include a generally domed body having a pulling eye 84 formed in the domed body. The pulling eye 84 is configured to be coupled to the tension member (not shown) for pulling the fiber optic cable 32 through the ductwork 40 during installation. In one embodiment, the pulling plug 82 may be integrally formed with the tubular body 74 and be formed of the same material as the tubular body 74, i.e., the tubular body 74 and the pulling plug 82 form a monolithic body. In an alternative embodiment (not shown), the pulling plug 82 may be a separate element and securely coupled to the tubular body 74. In this embodiment, the pulling plug 82 may be formed from a material having adequate tensile strength to accommodate the tensile loads expected during the routing of the fiber optic cable 32 in the ductwork 40. The material of the pulling plug 82 may be, for example, the same as or different from the material of the tubular body 74. The pulling plug 82 may be adhesively bonded to the tubular body 74 or welded to the tubular body 74 to generally provide a liquid-tight seal between the tubular body 74 and the pulling plug 82. Other means of attaching the pulling plug 82 to the tubular body 74 may also be possible.

The installation grip 50 may be connected to the fiber optic cable 32 adjacent the distal end 78 of the tubular body 74 for transferring the tensile loads applied to the installation grip 82 (e.g., via the tensile member connected to the pulling eye 84 of the pulling plug 82 or through other routing methods, such as air-assist methods) to the fiber optic cable 32. More particularly, the installation grip 50 may be connected to the at least one strength member 56 of the fiber optic cable 32 adjacent the distal end 78 of the tubular body 74. For example, the installation grip 50 may include at least one slot 86 formed through the tubular body 74 of the installation grip 50 adjacent its distal end 78 for receiving the at least one strength member 56 of the fiber optic cable 32 therethrough. As explained in more detail below, the at least one strength member 56 is received through the at least one slot 86, folded back onto the installation grip 50, and fixed to the installation grip 50. In an exemplary embodiment, the fiber optic cable 32 includes at least two strength members 56 and the installation grip 50 includes two slots 86 each receiving one or more strength members 56 therethrough. In one embodiment, the two slots 86 may be on opposed sides of the installation grip 50; however, other arrangements of the two slots 86 are possible. In further alternative embodiments, the installation grip 50 may include additional slots 86 for receiving one or more strength members 56.

As noted above, the at least one strength member 56 of the fiber optic cable 32 may be received in the at least one slot 86 and fixed to the installation grip 50, such as by clamping. To this end, the installation grip 50 may include a retention groove 88 adjacent the distal end 78 of the tubular body 74 configured to receive a clamp for fixing the at least one strength member 56 to the installation grip 50. In an exemplary embodiment, the at least one slot 86 may be located within the retention groove 88. In an alternative embodiment, however, the at least one slot 86 may be proximal of the retention groove 88 but with the at least one strength member 56 extending into the retention groove 88 when folded or turned back onto the installation grip 50. In one embodiment, the retention groove 88 extends all the way to the distal end 78 of the tubular body 74 (e.g., the retention groove 88 has only one end wall). In an alternative embodiment, however, the retention groove 88 may stop short of the distal end 78 of the tubular body 74 (e.g., the retention groove 88 has two end walls) to define an enlarged hub at the distal end 78 of the installation grip 50 (not shown).

In one embodiment, the installation grip 50 has a clamshell configuration including a first half shell 92 and a second half shell 94 that are configured to be coupled together to form the installation grip 50. In one embodiment, the first half shell 92 and the second half shell 94 may be completely separate, disassembled elements that are brought together and then secured by a closure element or latch to form the installation grip 50. In an alternative embodiment, the first half shell 92 and the second half shell 94 may be connected via a movable joint (not shown). For example, the first half shell 92 and the second half shell 94 may be connected by a pivot joint or hinge, such as a living hinge, to allow the half shells 92, 94 to move between an opened position and a closed position, for example. Other movable joints may also be possible in alternative embodiments.

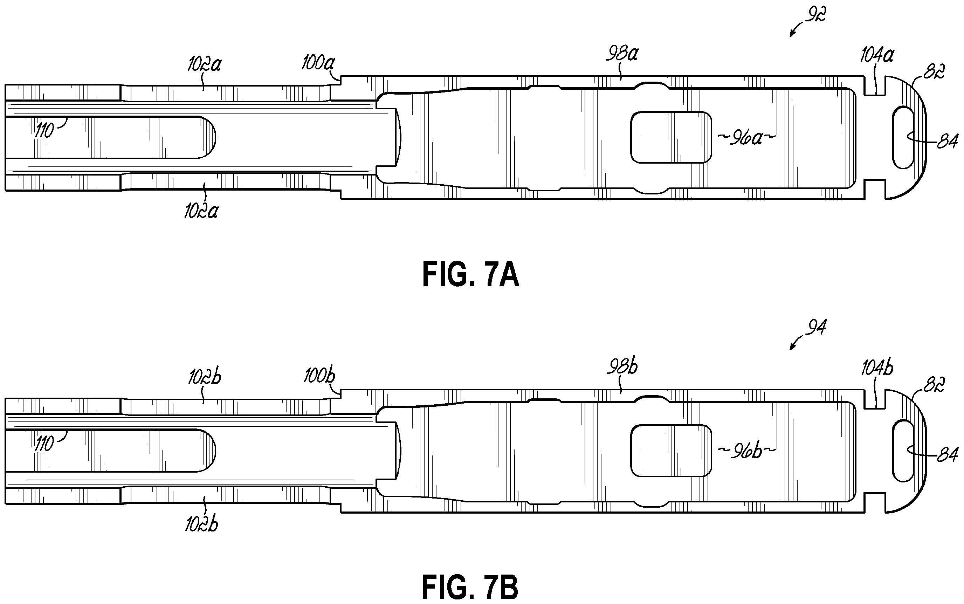

The first half shell 92 and the second half shell 94 have a similar construction and one of ordinary skill in the art understands that a description of the first half shell 92 will suffice as a description for the second half shell 94. The suffix "a" will denote parts of the first half shell 92 and the suffix "b" will denote parts of the second half shell 94. As illustrated in Figs. 6-7B, the first half shell 92 may have a D-shaped cross-sectional profile and includes a first cavity portion 96a along a mating interface 98a of the first half shell 92. The first cavity portion 96a may have a shape that substantially matches the shape (at least one half of the shape) of the connector sub-assembly 68 (including the dust cap 70) and a portion of the fiber optic cable 32 immediately adjacent the connector sub-assembly 68. Additionally, the first half shell 92 may include a first retention groove portion 100a and at least one first slot portion 102a adjacent the distal end 78 of the first half shell 92. Furthermore, the first half shell 92 may include a first notch portion 104a adjacent the proximal end 76 of the first half shell 92, for purposes described below.

When the first half shell 92 and the second half shell 94 are brought together and engage each other along the mating interface 98a, 98b, the first cavity portion 96a of the first half shell 92 and the second cavity portion 96b of the second half shell 94 collectively form the interior cavity 80 which has a shape that substantially matches the shape of the connector sub-assembly 68 and the portion of the fiber optic cable 32 immediately adjacent the connector sub-assembly 68. Additionally, the first retention groove portion 100a of the first half shell 92 and the second retention groove portion 100b of the second half shell 94 may collectively define the retention groove 88. In a similar manner, the at least one first slot portion 102a of the first half shell 92 and the at least one second slot portion 102b of the second half shell 94 may collectively define the at least one slot 86. As noted above, in an exemplary embodiment, the installation grip includes two slots 86. Thus, in this embodiment, the first half shell 92 may include two first slot portions 102a and the second half shell 94 may include two second slot portions 102b, which when the first half shell 92 and the second half shell 94 are brought together form the two slots 86.

Furthermore, the first notch portion 104a of the first half shell 92 and the second notch portion 104b of the second half shell 94 may collectively define an annular notch 106 adjacent the proximal end 76 of the installation grip 50. The notch 106 is configured to receive a securing means for securing the first half shell 92 and the second half shell 94 together. By way of example and without limitation, the securing means may include a ligature (e.g., wire, rope, cable, etc.), a band (e.g., a rubber band, band clamp, etc.), and/or a spring clip. In an exemplary embodiment, for example, the spring clip may include a C-shaped spring clip 108 that snap fits within the notch 106 to secure the first half shell 92 and the second half shell 94 together. Although Figs. 4 and 6-7B show only one notch 106 adjacent the proximal end 76 of the installation grip 50, it should be appreciated that first half shell 92 and the second half shell 94 may be secured together with more than one securing means. By way of example and without limitation, the distal end 78 of the installation grip 50 may include an additional notch 106 for receiving another securing means, such as a C-shaped spring clip 108 (not shown).

In addition to limiting longitudinal and lateral movements of the connector sub-assembly 68 relative to the fiber optic cable 32, it may be important to limit rotational movements of the connector sub-assembly 68 relative to the fiber optic cable 32. For example, as best illustrated in Figs. 6-7B, the installation grip 50 may include at least one rotational stop cavity 110 adjacent the distal end 78 of the installation grip 50. In an exemplary embodiment, for example, the first half shell 92 and the second half shell 94 may each include a rotational stop cavity 110. The stop cavities 110, however, may vary in number and arrangements on the first and second half shells 92, 94. Moreover, the fiber optic cable 32 may include at least one rotational stop 112. For example, at least one rotational stop 112 may be fixed to the outer jacket 54 of the fiber optic cable 32. In one embodiment, for example, the fiber optic cable 32 may include two rotational stops 112 positioned on opposing sides of the fiber optic cable 32. The rotational stops 112, however, may vary in number and arrangements on the fiber optic cable 32. When the first half shell 92 and the second half shell 94 are coupled together to encase the connector sub-assembly 68, the at least one rotational stop 112 on the fiber optic cable 32 may engage with the at least one rotational cavity 110 in the installation grip 50 to limit rotational movements of the installation grip 50 relative to the fiber optic cable 32.

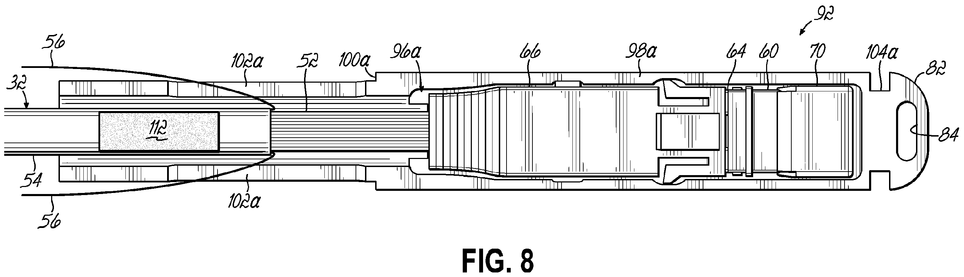

Figs. 8-10 illustrate a method of preparing the fiber optic cable assembly 48 for installation in ductwork 40 at an installation site, such as at office building 26. In an initial step (not illustrated), the fiber optic cable 32 is provided and may be terminated with the ferrule 60. This termination is a pre-termination and performed in a manufacturing setting where precise and automated processes may be used to terminate the fiber optic cable 32 with the ferrule 60. Such processes are well understood by one of ordinary skill in the art of fiber optic cables and thus will not be described in further detail herein. In some embodiments, and as described above, the ferrule 60 may be part of a connector sub-assembly 68, whose other components may also be installed as part of the termination process in the manufacturing setting.

In a next step, one of the first half shell 92 or the second half shell 94 is provided. For purposes of description, the process will be described as having the first half shell 92 being initially provided. It should be appreciated, however, that in an alternative embodiment, the second half shell 94 may be initially provided. In a subsequent step, as illustrated in Fig. 8, the connector sub-assembly 68 may be placed in the first cavity portion 96a of the first half shell 92. As noted above, the first cavity portion 96a has a shape that substantially matches the shape of the connector sub-assembly 68 and the immediate portion of the fiber optic cable 32 so that these elements are tightly received within the first cavity portion 96a.

Next, as illustrated in Fig. 9, the second half shell 94 may be brought into contact with the first half shell 92 along their respective mating interfaces 98a, 98b to form the installation grip 50. When the two half shells 92, 94 are brought together, the connector sub-assembly 68 and the immediate portion of the fiber optic cable 32 are encased within the interior cavity 80 of the installation grip 50 with little play (e.g., longitudinal and/or lateral movements). As the two half shells 92, 94 are being brought together, care must be taken such that the at least one strength member 56 of the fiber optic cable 32 extends through the at least one slot 86 in the installation grip 50. In a subsequent step, after the first half shell 92 and the second half shell 94 are brought together, they may be secured together with a latch. For example, as illustrated in Fig. 9, the first half shell 92 and the second half shell 94 may be secured together using at least one C-shaped spring clip 108. As noted above, however, other securing means may be used to secure the first half shell 92 and the second half shell 94 together and aspects of the disclosure should not be limited to a particular securing means.

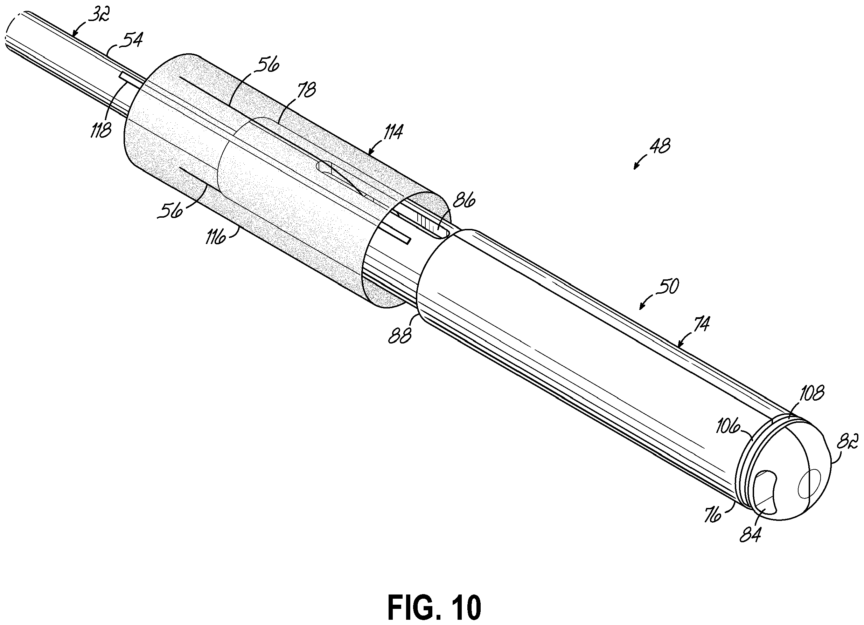

After securing the first and second half shells 92, 94 together, in a subsequent step, the at least one strength member 56 may be pulled distally and folded back over the installation grip 50 to extend over a portion of the fiber optic cable 32. This pulling of the at least one strength member 56 pre-tensions the at least one strength member 56 and provides strain relief for the connector sub-assembly 68 and the optical fibers 52 of the fiber optic cable 32 immediately adjacent the connector sub-assembly 68. To maintain the strain relief, the at least one strength member may be fixed to the installation grip 50. As noted above, in an exemplary embodiment, the at least one strength member may be clamped to the installation grip 50. For example, as illustrated in Fig. 10, the at least one strength member 56 may be fixed to the installation grip 50 by a clamp 114 including a heat shrink material. More particularly, the clamp 114 may include a heat shrink tube 116 that was placed about the fiber optic cable 32 prior to its termination by the connector sub-assembly 68. Accordingly, after the at least one strength member 56 has been tensioned, the heat shrink tube 116 may be moved along the fiber optic cable 32 to at least partially reside within the retention groove 88 of the installation grip 50. Additionally, the heat shrink tube 116 may also extend along a portion of the fiber optic cable 32 distal of the end of the installation grip 50 and along which the at least one strength member 56 may extend when folded back over the installation grip 50. Next, heat may be applied to the heat shrink tube 116 to cause it to move from its expanded position to its contracted position. In the contracted position, the at least one strength member 56 is clamped to the installation grip 50, at least under the tensions expected to be imposed on the installation grip 50 during the routing of the fiber optic cable assembly 48 through the ductwork 40 of the installation site.

With the installation grip 50 attached to the fiber optic cable 32 as described above, the fiber optic cable assembly 48 is configured to be routed through the ductwork 40. In this installation process, at a network box 34 on one of the levels of the office building 26, for example, the end of the fiber optic cable assembly 48 having the installation grip 50 may be attached to the tension member extending through one of the microducts 44 of the ductwork 40. The tension member may then be pulled back through the microduct 44. As described above, this imposes a tensile load on the installation grip 50. However, this tensile load on the installation grip 50 is transferred to the at least one strength member 56 of the fiber optic cable 32, which is clamped to the installation grip 50, along a load path that effectively bypasses the connector sub-assembly 68 and the optical fibers 52 of the fiber optic cable 32 immediately adjacent the connector sub-assembly 68.

While the above described moving the installation grip 50 through the ductwork 40 by pulling on a tension member coupled to the installation grip 50, other or additional means may be used for moving the installation grip 50 and the fiber optic cable 32 through the microduct 44 of the ductwork 40. By way of example and without limitation, an air-assist method may be used alone or in conjunction with the tension member to move the fiber optic cable assembly 48 through the ductwork 40. For example, a blowing method or a jetting method may be used alone or in conjunction with the tension member. These air-assist methods are well known by those of ordinary skill in the art of fiber optic installation and a further description of these processes will not be provided herein. In any event, these processes also impose a tensile load on the installation grip 50 which is transferred to the at least one strength member 56 of the fiber optic cable 32 along a load path that effectively bypasses the connector sub-assembly 68 and the optical fibers 52 of the fiber optic cable 32 immediately adjacent the connector sub-assembly 68.

Once the end of the fiber optic cable assembly 48 having the installation grip 50 has been routed through the microduct 44. The installation grip 50 may be removed from fiber optic cable 32. For example, before the heat shrink tube 116 was activated toward its contracted position, a rip cord 118 may be inserted through the heat shrink tube 112. Thus, to remove the installation grip 50, the rip cord 118 may be pulled to sever the heat shrink tube 116 and release the clamping force that fixes the at least one strength 56 to the installation grip 50. This permits the installation grip 50 to be pulled proximally and removed from the end of the fiber optic cable 32, to thereby expose the connector sub-assembly 68. Subsequently, the connector sub-assembly 68 may be connected with another connector sub-assembly (e.g., that includes the connector housing) to complete the assembly of the fiber optic connector (e.g., the MPO connector) at the end of the fiber optic cable 32. The other end of the fiber optic cable 32 may already be pre-terminated with one or more fiber optic connectors (not shown). Thus, the fiber optic cable 32 is ready to be connected to optical ports associated with the network equipment in the cabinet 30 in the telecommunications room 28, and to optical ports associated with the network boxes 34 on the various levels of the office building 26. The process described above may be repeated as necessary to route additional fiber optic cables 32 through the microducts 44 of the ductwork 40.

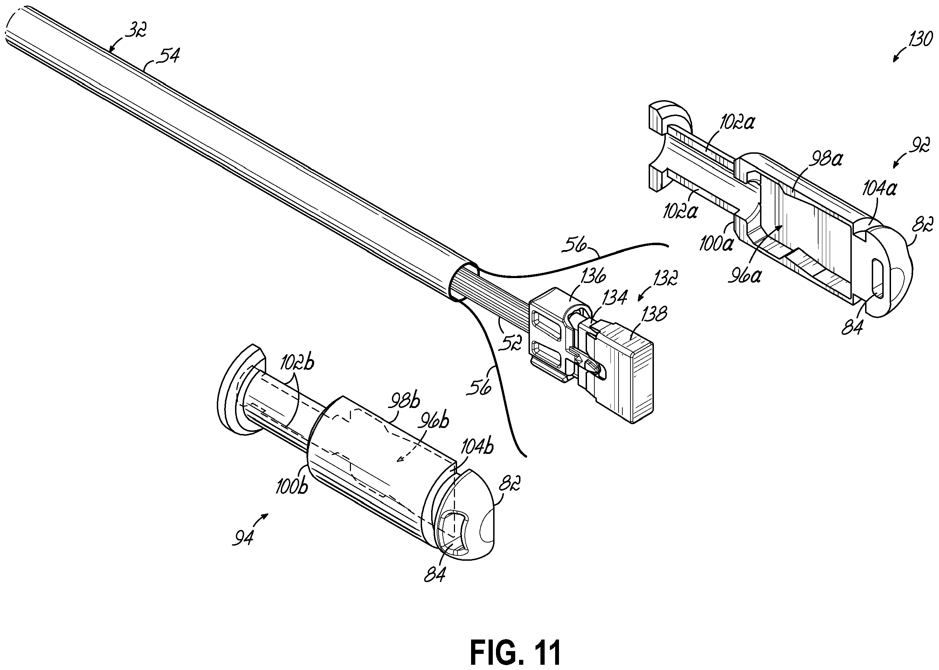

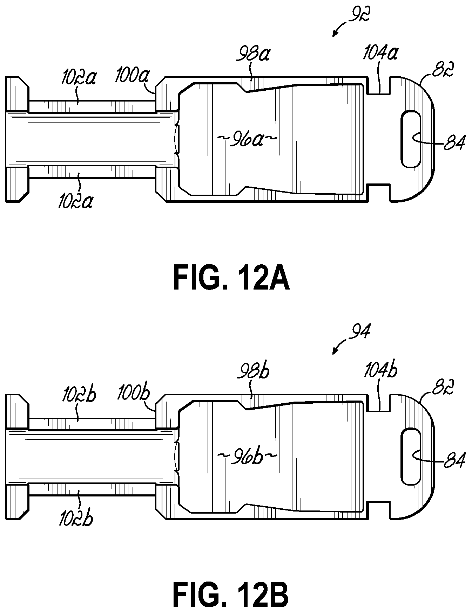

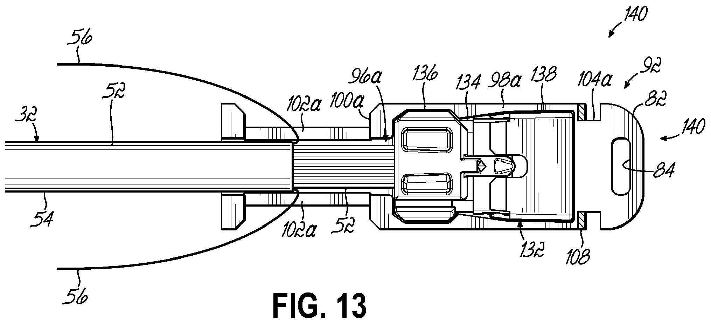

Figs. 11-13 illustrate another embodiment of a fiber optic cable assembly 130 in accordance with the disclosure. The fiber optic cable assembly 130 is similar to fiber optic cable assembly 48 discussed above in reference to Figs. 4-8. Thus, similar reference numbers will refer to like features between the two embodiments and only the major differences between the two embodiments will be described in further detail. In this regard, the primary difference between the two embodiments is the type of connector components that terminate the optical fibers 52 of the fiber optic cable 32. In particular, Figs. 11-13 illustrate a connector assembly 132 that includes a ferrule 134 and ferrule holder 136 coupled to the ferrule 134. The connector assembly 132 may be a "junior" or "behind-the-wall" version of a very small form factor (VSFF) multi-fiber optical connector. Junior or "Jr." versions of optical connectors (also referred to as "behind-the-wall" connectors) include a smaller sleeve or body (the ferrule holder 136 in the illustrated embodiment) for engaging an adapter, but typically require a separate tool to release the engagement and remove the connector from the adapter. These types of connectors have a low profile and may be advantageous for uses where removal from an adapter is not expected or common, such as on the inside of a transceiver, within a fiber optic module, or on the back side of a fiber optic patch panel. In the illustrated embodiment, the connector assembly 132 is in the form of an MMC Junior connector commercially available from US Conec Ltd.

In alternative embodiments, the ferrule holder 136 may instead be in the form of a component that functions similar to the ferrule push 66. In this regard, in some embodiments, the connector subassembly 132 may include a ferrule 134 based on the TMT ferrule format and a ferrule push (not shown) located behind the ferrule 134, with the two components representing a connector sub-assembly that is something less than a complete fiber optic connector. The connector sub-assembly can be assembled with a connector housing/body after being pulled through a duct using an installation grip 140. Some examples of ferrule push embodiments for a TMT ferrule are described in PCT Patent Publication No. WO 2024/020500 A1, the disclosure of which is incorporated herein by reference.

Still referring to Figs. 11-13 and similar to the embodiment discussed above, to protect the ferrule 134 of the connector assembly 132 prior to use, the connector sub-assembly 132 may further include a dust cap 138. The dust cap 138 may be coupled to the ferrule 134 and/or the ferrule holder 136 and be configured to cover the end face of the ferrule 134 and keep it free of debris that could degrade the optical signals in the optical fibers 52 during use. Similar to the embodiment discussed above, it is expected that the dust cap 138 will remain part of the connector assembly 132 during the routing of the fiber optic cable 32 through the pathways of the ductwork 40 in the office building 26 using the installation grip 140, which has a slightly different shape compared to installation grip 50 due the change in the configuration of the connector components. By way of example, the configurations of cavities 96a, 96b are configured to match the size and shape of the connector assembly 132. Applicant submits that one of ordinary skill in the art will understand the disclosure of the fiber optic cable assembly 130 and a further description will not be provided herein. Additionally, Applicant submits that one of ordinary skill in the art will also understand a method of preparing the fiber optic cable assembly 130 for installation in ductwork 40 based on the above description, and further details will also not be provided herein.

The installation grip 140 may be advantageous due to its reduced size compared to the installation grip 50 described above. By way of example, and without limitation, in one embodiment, the length of the installation grip 140 may be less than about 30 millimeters (mm), which represents a reduction between about 50% and about 70% compared to the length of the installation grip 50. Moreover, the diameter of the installation grip 140 may be less than about 10 mm, which represents a reduction between about 5% and about 15% compared to the diameter of the installation grip 50. Thus, using the VSFF assembly 132 for the fiber optic cable assembly 130 may improve the ease of installation or allow additional fiber optic cables 32 to be routed through the ductwork 40, for example.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The disclosure in its broader aspects is therefore not limited to the specific details, representative apparatus and methods and illustrative examples shown and described. Accordingly, departures may be made from such details without departing from the scope of the disclosure.

## Claims

1. An installation grip for a fiber optic cable, the fiber optic cable comprising:
an outer jacket;
a plurality of optical fibers carried within the outer jacket;
at least one strength member extending along a length of the fiber optic cable; and
a ferrule terminating the plurality of optical fibers,
the installation grip comprising:
a tubular body having a proximal end, a distal end, and an internal cavity, wherein the internal cavity is configured to receive the ferrule, and wherein the tubular body includes at least one slot adjacent the distal end; and
a pulling plug at the proximal end of the tubular body for connection to a tension member for pulling the fiber optic cable along ductwork at an installation site,
wherein the at least one slot in the tubular body is configured to receive the at least one strength member of the fiber optic cable such that a tensile load imposed on the installation grip is transferred to the at last one strength member along a load path that bypasses the ferrule.

2. The installation grip of claim 1, wherein the installation grip comprises:
a first half shell defining a first cavity portion; and
a second half shell defining a second cavity portion,
wherein the first half shell and the second half shell are configured to be coupled together to form the installation grip, and
wherein when the first half shell and the second half shell are coupled together, the first cavity portion and the second cavity portion define the internal cavity.

3. The installation grip of claim 2, wherein the first half shell includes at least one first slot portion and the second half shell includes at least one second slot portion, and wherein when the first half shell and the second half shell are coupled together, the at least one first slot portion and the at least one second slot portion define the at least one slot.

4. The installation grip of claim 3, wherein the at least one first slot portion includes a pair of first slot portions, wherein the at least one second slot portion includes a pair of second slot portions, and wherein when the first half shell and the second half shell are coupled together, the pair of first slot portions and the pair of second slot portions define a pair of slots.

5. The installation grip of claim 4, wherein the pair of slots are on opposed sides of the installation grip.

6. The installation grip of any of the preceding claims, wherein the installation grip includes a retention groove, and wherein the at least one slot is positioned in the retention groove.

7. The installation grip of claim 6, when dependent from any of claims 2-5, wherein the first half shell includes a first retention groove portion and the second half shell includes a second retention groove portion, and wherein when the first half shell and the second half shell are coupled together, the first retention groove portion and the second retention groove portion define the retention groove.

8. The installation grip of claim 6 or 7, wherein the installation grip further comprises a clamp configured to be attached to the installation grip in the retention groove and to fix the at least one strength member of the fiber optic cable to the installation grip so that the tensile load imposed on the installation grip is transferred to the at least one strength member.

9. The installation grip of claim 8, wherein the clamp includes a heat shrink tube.

10. The installation grip of any of claims 2-9, wherein the installation grip further includes at least one latch for securing the first half shell and the second half shell together.

11. The installation grip of claim 10, wherein the at least one latch includes at least one spring clip.

12. The installation grip of any of the preceding claims, wherein the internal cavity includes a rotational stop cavity configured to receive a rotational stop on the fiber optic cable to limit rotation of the installation grip relative to the fiber optic cable.

13. A fiber optic cable assembly, comprising:
a fiber optic cable having an end, the fiber optic cable comprising:
an outer jacket;
a plurality of optical fibers carried within the outer jacket;
at least one strength member extending along a length of the fiber optic cable; and
a ferrule terminating the plurality of optical fibers at the end of the fiber optic cable; and
the installation grip of any of claims 1-12 encasing the ferrule at the end of the fiber optic cable for routing the fiber optic cable along ductwork at an installation site,
wherein the routing of the fiber optic cable along the pathway causes a tensile load to be imposed on the installation grip, and
wherein the installation grip transfers the tensile load imposed on the installation grip to the at least one strength member along a load path that bypasses the ferrule.

14. The fiber optic cable assembly of claim 13, wherein the ferrule is part of a connector sub-assembly that further includes a ferrule push component disposed between an end of the outer jacket and the ferrule, wherein the connector sub-assembly is configured to be assembled with a connector housing when the connector sub-assembly is not encased by the installation grip to form a fiber optic connector, and wherein the internal cavity of the installation grip defines a shape that substantially matches the shape of the connector sub-assembly to limit movement of the connector sub-assembly relative to the installation grip.

15. The fiber optic cable assembly of claim 13 or 14, wherein the outer jacket of the fiber optic cable extends into the installation grip, and wherein the at least one slot in the tubular body of the installation grip is disposed between an end of the outer jacket and the ferrule.
